# EUROPÄISCHE PATENTSCHRIFT

(11) **EP 3 144 836 B1**
(45) Veröffentlichungstag und Bekanntmachung des Hinweises auf die Patenterteilung: **09.12.2026**
(21) Anmeldenummer: 16188244.4
(22) Anmeldetag: 12.09.2016
(51) Int. Cl.: G06F 21/32, G06F 16/93

(54) **VERFAHREN ZUM BEREITSTELLEN VON DIGITALEN DOKUMENTENDATEN**
METHOD FOR PROVIDING DIGITAL DOCUMENT DATA
PROCÉDÉ DE FOURNITURE DE DONNÉES DE DOCUMENTS NUMÉRIQUES

(30) Priorität: 17.09.2015 DE 102015115653
(43) Veröffentlichungstag der Anmeldung: 22.03.2017
(73) Patentinhaber: Bundesdruckerei GmbH, 10969 Berlin (DE)
(72) Erfinder: Schulz, Henrik, 30177 Hannover (DE)
(74) Vertreter: Patentship Patentanwaltsgesellschaft mbH

(56) Entgegenhaltungen:
- DE-A1- 102013 111 883
- US-A- 5 490 217
- US-A- 5 787 186

## Beschreibung

Die vorliegende Erfindung betrifft das Gebiet der Digitalisierung von Dokumentendaten von Identifikationsdokumenten.

Die Patentschrift US 5,490,217 zeigt ein Scannen eines Dokumentes, wobei ein maschinenlesbarer Bildcode erzeugt wird, in welchem Informationen bezüglich des gescannten Dokumentes encodiert sind.

Die Patentschrift US 5,787,186 zeigt eine Analyse eines Fotos eines Identifikationsdokumentes, um basierend auf der Analyse einen numerischen Code zu berechnen, der spezifisch für das Foto des Identifikationsdokumentes ist. Der numerische Code wird auf das Identifikationsdokument aufgebracht.

Die Offenlegungsschrift DE 10 2013 111 883 A1 zeigt ein Verfahren zur Überprüfung der Identität einer Person.

Ein Identifikationsdokument, wie ein Personalausweis oder ein Führerschein, umfasst üblicherweise Dokumentendaten. Dokumentendaten können Personendaten eines Besitzers des Identifikationsdokumentes sein, welche die Identität oder den Status des Besitzers ausweisen, oder Daten des Identifikationsdokumentes, wie eine Identifikationsnummer. Bei Verlust des Identifikationsdokumentes ist eine Überprüfung der Personendaten daher schwierig.

Es ist daher die Aufgabe der vorliegenden Erfindung, ein effizientes Konzept zum Bereitstellen von digitalen Dokumentendaten von Identifikationsdokumenten zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die vorliegende Erfindung basiert auf der Erkenntnis, dass die obige Aufgabe durch ein Erzeugen digitaler Dokumentendaten eines Identifikationsdokumentes, ein Speichern der digitalen Dokumentendaten in einer Speicherentität und ein Bereitstellen einer Kennung zum Abrufen der gespeicherten digitalen Dokumentendaten gelöst werden kann.

Gemäß einem ersten Aspekt betrifft die Erfindung ein Verfahren zum Bereitstellen von digitalen Dokumentendaten, welche ein Identifikationsdokument einer Person repräsentieren, mit: Erzeugen der digitalen Dokumentendaten auf der Basis des Identifikationsdokumentes; Übermitteln der digitalen Dokumentendaten zu einer Speicherentität; Speichern der digitalen Dokumentendaten in der Speicherentität; und Bereitstellen einer Kennung zum Abrufen der gespeicherten digitalen Dokumentendaten aus der Speicherentität. Dadurch wird der Vorteil erreicht, dass die Dokumentendaten eines Identifikationsdokumentes in digitalisierter Form zugänglich gemacht werden können und eine effiziente Identifizierung einer Person, beispielsweise bei Verlust oder Diebstahl des Identifikationsdokumentes, erfolgen kann.

Das Identifikationsdokument kann eines der folgenden Identifikationsdokumente sein: Identitätsdokument, wie Personalausweis, Reisepass, Visum, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner ein Lichtbild oder Biometriedaten umfassen. Das Identitätsdokument kann ein- oder mehrlagig bzw. papier- und/oder kunststoffbasiert sein. Das Identitätsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Das Identifikationsdokument kann ferner mehrere Dokumentenseiten oder Dokumentenblätter aufweisen, welche durch Buchbindung miteinander verbunden sein können.

Gemäß einer Ausführungsform sind oder umfassen die digitalen Dokumentendaten digitale Druckdaten des Identifikationsdokumentes, mit welchen das Identifikationsdokument herstellbar ist. Dadurch wird der Vorteil erreicht, dass ein neues Identifikationsdokument auf Basis der digitalen Dokumentendaten erzeugt werden kann.

Gemäß einer Ausführungsform umfassen die Dokumentendaten Biometriedaten der Person. Die Biometriedaten können biometrische Merkmale der Person repräsentieren.

Gemäß einer Ausführungsform werden die digitalen Druckdaten während der Herstellung des Identifikationsdokumentes erzeugt und als digitale Dokumentendaten an die Speicherentität übermittelt. Dadurch wird der Vorteil erreicht, dass die digitalen Druckdaten bereits bei Ausstellung des Identifikationsdokumentes vorliegen können und nicht nachträglich erzeugt werden müssen.

Gemäß einer Ausführungsform umfassen die digitalen Dokumentendaten eine oder mehrere der nachfolgenden Daten: Identifikationsdaten der Person, digitale Bilddaten eines Bildes der Person, Formatdaten, welche ein Format des Identifikationsdokumentes bestimmen, digitale Bilddaten eines Bildes des Identifikationsdokumentes. Dadurch wird der Vorteil erreicht, dass auf Basis der digitalen Dokumentendaten eine möglichst genaue Anzeige und/oder Erzeugung des Identifikationsdokumentes erfolgen kann.

Gemäß einer Ausführungsform umfasst das Erzeugen der digitalen Dokumentendaten die folgenden Schritte: Aufnehmen eines Bildes des Identifikationsdokumentes; und Bereitstellen von digitalen Bilddaten des aufgenommenen Bildes oder Digitalisieren des aufgenommenen Bildes, um die digitalen Dokumentendaten zu erzeugen. Dadurch wird der Vorteil erreicht, dass die digitalen Dokumentendaten effizient und einfach mittels einer Bildaufnahme erzeugt werden können. Die Digitalisierung der Bildaufnahme kann hierbei direkt bei der Bildaufnahme, beispielweise durch eine Digitalkamera, welche ein digitales Bild speichert, oder im Anschluss an die Bildaufnahme, beispielweise durch Einscannen der Bildaufnahme und abspeichern des Scans in einer Datenverarbeitungseinrichtung, erfolgen.

Gemäß einer Ausführungsform ist die Speicherentität ein Identifikationsserver, der über ein Kommunikationsnetzwerk erreichbar ist, wobei die digitalen Dokumentendaten zu dem Identifikationsserver über das Kommunikationsnetzwerk übermittelt werden, und wobei die Kennung zum Abrufen der gespeicherten digitalen Dokumentendaten bereitgestellt wird. Dadurch wird der Vorteil erreicht, dass die digitalen Dokumentendaten über das Kommunikationsnetzwerk effizient auf die Speicherentität übermittelt werden können und/oder von der Speicherentität bereitgestellt werden können.

Gemäß einer Ausführungsform werden die digitalen Dokumentendaten vor der Übermittlung an die Speicherentität oder in der Speicherentität kryptographisch verschlüsselt, insbesondere unter Verwendung eines der Person oder einem Dienstanbieter zugeordneten kryptographischen Schlüssels oder einer digitalen Signatur der Person oder des Dienstanbieters verschlüsselt. Dadurch wird der Vorteil erreicht, dass die digitalen Dokumentendaten effizient vor einem ungewollten Zugriff Dritter geschützt werden können.

Gemäß einer Ausführungsform werden die digitalen Dokumentendaten über einen verschlüsselten Kommunikationskanal zu der Speicherentität übermittelt. Dadurch wird der Vorteil erreicht, dass die digitalen Dokumentendaten bei der Übermittlung effizient vor einem ungewollten Zugriff geschützt werden können.

Gemäß einer Ausführungsform werden die digitalen Dokumentendaten in der Speicherentität kryptographisch verschlüsselt gespeichert. Dadurch wird der Vorteil erreicht, dass digitale Dokumentendaten, welche in der Speicherentität gespeichert sind, effizient vor einem ungewollten Zugriff geschützt werden können.

Gemäß einer Ausführungsform umfassen die Dokumentendaten Biometriedaten der Person. Die Biometriedaten können biometrische Merkmale der Person repräsentieren.

Gemäß einer Ausführungsform umfasst die Kennung einen Code, insbesondere einen optisch auslesbaren Code, und/oder ein Passwort und/oder ein biometrisches Merkmal der Person. Dadurch wird der Vorteil erreicht, dass sich eine Person effizient mit dieser Kennung authentifizieren und die digitalen Dokumentendaten abrufen kann.

Gemäß einer Ausführungsform werden die digitalen Dokumentendaten in der Speicherentität in einem durch eine Kommunikationsadresse adressierbaren Speicherbereich der Speicherentität gespeichert, und umfasst die Kennung diese Kommunikationsadresse. Dadurch wird der Vorteil erreicht, dass ein effizientes und schnelles Zugreifen auf die gespeicherten digitalen Dokumentendaten nach Eingabe der Kennung erfolgen kann.

Gemäß einem zweiten Aspekt betrifft die Erfindung ein Verfahren zum Erstellen eines Identifikationsdokumentes einer Person unter Verwendung einer der Person zugeordneten Kennung, mit: Abrufen von digitalen Dokumentendaten, welche das Identifikationsdokument repräsentieren, unter Verwendung der Kennung von einer Speicherentität; und Erstellen des Identifikationsdokumentes unter Verwendung der abgerufenen digitalen Dokumentendaten. Dadurch wird der Vorteil erreicht, dass ein neues Identifikationsdokument auf Basis der gespeicherten digitalen Dokumentendaten effizient erstellt werden kann, beispielsweise bei Verlust oder Diebstahl des Identifikationsdokumentes.

Gemäß einer Ausführungsform sind oder umfassen die digitalen Dokumentendaten digitale Druckdaten des Identifikationsdokumentes, mit welchen das Identifikationsdokument herstellbar ist. Dadurch wird der Vorteil erreicht, dass ein neues Identifikationsdokument auf Basis der digitalen Dokumentendaten erzeugt werden kann.

Gemäß einer Ausführungsform werden die digitalen Druckdaten während der Herstellung des Identifikationsdokumentes erzeugt und als digitale Dokumentendaten an die Speicherentität übermittelt. Dadurch wird der Vorteil erreicht, dass die digitalen Druckdaten bereits bei Ausstellung des Identifikationsdokumentes vorliegen können und nicht nachträglich erzeugt werden müssen.

Gemäß einer Ausführungsform umfassen die digitalen Dokumentendaten eine oder mehrere der nachfolgenden Daten: Identifikationsdaten der Person, digitale Bilddaten eines Bildes der Person, Formatdaten, welche ein Format des Identifikationsdokumentes bestimmen, digitale Bilddaten eines Bildes des Identifikationsdokumentes. Dadurch wird der Vorteil erreicht, dass auf Basis der digitalen Dokumentendaten eine möglichst genaue Anzeige und/oder Erzeugung des Identifikationsdokumentes erfolgen kann.

Gemäß einer Ausführungsform umfasst die Kennung einen Code, insbesondere einen optisch auslesbaren Code, und/oder ein Passwort und/oder ein biometrisches Merkmal der Person. Dadurch wird der Vorteil erreicht, dass sich eine Person effizient mit dieser Kennung authentifizieren und die digitalen Dokumentendaten abrufen kann.

Gemäß einer Ausführungsform werden die digitalen Dokumentendaten von der Speicherentität über ein Kommunikationsnetzwerk abgerufen, und umfasst das Abrufen der digitalen Dokumentendaten die folgenden Schritte: Aufbauen einer Kommunikationsverbindung zu der Speicherentität; Eingeben der Kennung oder eines durch die Kennung gespeicherten Passwortes in einer Eingabemaske, insbesondere in einer durch die Speicherentität bereitgestellten Eingabemaske; und Abrufen, insbesondere Herunterladen, der digitalen Dokumentendaten ansprechend auf die Eingabe der Kennung oder des Passwortes. Dadurch wird der Vorteil erreicht, dass die digitalen Dokumentendaten effizient über das Kommunikationsnetzwerk abgerufen werden können. Das Abrufen kann von einem Client-Gerät in dem Kommunikationsnetzwerk, beispielsweise einem Smartphone, aus erfolgen, welches eine Eingabemaske zur Eingabe der Kennung umfasst.

Gemäß einer Ausführungsform umfasst das Erstellen des Identifikationsdokumentes das Ausdrucken des Identifikationsdokumentes unter Verwendung der abgerufenen digitalen Dokumentendaten oder das Anzeigen des Identifikationsdokumentes unter Verwendung der abgerufenen digitalen Dokumentendaten auf einer elektronischen Anzeige. Dadurch wird der Vorteil erreicht, dass ein Ausdruck oder eine Anzeige eines Identifikationsdokumentes effizient erstell werden kann mit deren Hilfe sich eine Person ausweisen kann, beispielsweise bei Verlust oder Diebstahl des Identifikationsdokumentes.

Gemäß einer Ausführungsform wird das Verfahren mittels eines Kommunikationsgerätes ausgeführt, und ist die Speicherentität ein lokales Speichermedium des Kommunikationsgerätes. Dadurch wird der Vorteil erreicht, dass weit verbreitete Kommunikationsgeräte, wie beispielsweise Smartphones, zum Abrufen und Anzeigen der digitalisierten Dokumentendaten verwendet werden können.

Gemäß einem dritten Aspekt betrifft die Erfindung ein Kommunikationsgerät zum Bereitstellen eines Identifikationsdokumentes einer Person, mit: einer Kommunikationsschnittstelle, welche ausgebildet ist, unter Verwendung einer der Person zugeordneten Kennung digitale Dokumentendaten von einer Speicherentität abzurufen; und einer Visualisierungseinrichtung zur Visualisierung des Identifikationsdokumentes auf der Basis der abgerufenen digitalen Dokumentendaten; und/oder einer Kommunikationsschnittstelle zum Aussenden der abgerufenen digitalen Dokumentendaten an eine Visualisierungseinrichtung. Dadurch wird der Vorteil erreicht, dass mittels des Kommunikationsgerätes effizient und schnell eine Anzeige des Identifikationsdokumentes auf Basis der digitalen Dokumentendaten erfolgen kann. Somit kann sich eine Person bei Verlust oder Diebstahl eines Identifikationsdokumentes, beispielsweise eines Reisepasses oder Personalausweises, mit Hilfe des Kommunikationsgerätes ausweisen.

Gemäß einer Ausführungsform ist das Kommunikationsgerät ein Smartphone.

Gemäß einer Ausführungsform weist die jeweilige Visualisierungseinrichtung eine Anzeige zum Anzeigen des Identifikationsdokumentes oder einen Drucker zum Ausdrucken des Identifikationsdokumentes auf einem Träger auf, um das Identifikationsdokument zu visualisieren. Dadurch wird der Vorteil erreicht, dass eine effiziente Visulisierung des Identifikationsdokumentes auf Basis der digitalen Dokumentendaten erfolgen kann.

Gemäß einer Ausführungsform weist das Kommunikationsgerät einen Speicher auf, in welchem die Kennung gespeichert ist. Dadurch wird der Vorteil erreicht, dass die Kennung nicht mehr durch eine Person eingegeben werden muss. Bei der Kennung kann es sich um einen Code, und/oder ein Passwort handeln, welches aufgrund einer großen Länge und/oder eines großen Zeichenraums, besonders geschützt ist. Der Speicher kann ein Flash-Speicher sein, beispielsweise der Flash-Speicher eines Smartphones.

Gemäß einer Ausführungsform ist das Kommunikationsgerät programmtechnisch eingerichtet, um das Verfahren gemäß dem zweiten Aspekt der Erfindung auszuführen. Dadurch wird der Vorteil erreicht, dass mit Hilfe des Kommunikationsgerätes ein Identifikationsdokument auf Basis der gespeicherten digitalen Dokumentendaten effizient erstellt werden kann, beispielsweise bei Verlust oder Diebstahl des Identifikationsdokumentes. Ist das Kommunikationsgerät ein Smartphone, so kann eine Visualisierung des Identifikationsdokumentes auf einer Displayanzeige des Smartphones erfolgen.

Gemäß einem vierten Aspekt betrifft die Erfindung ein Computerprogramm mit einem Programmcode zum Ausführen des Verfahrens zum Bereitstellen von digitalen Dokumentendaten, welche ein Identifikationsdokument einer Person repräsentieren, wenn es auf einem Computer ausgeführt wird. Dadurch wird der Vorteil erreicht, dass digitale Dokumentendaten eines Identifikationsdokumentes mit Hilfe eines Computers, auf dem das Computerprogramm installiert ist, effizient erstellt werden können.

Gemäß einem fünften Aspekt betrifft die Erfindung ein Computerprogramm mit einem Programmcode zum Ausführen des Verfahrens zum Erstellen eines Identifikationsdokumentes, wenn es auf einem Computer ausgeführt wird. Dadurch wird der Vorteil erreicht, dass ein Identifikationsdokument auf Basis der gespeicherten digitalen Dokumentendaten mit Hilfe eines Computers, auf dem das Computerprogramm installiert ist, effizient erstellt werden kann.

Gemäß einem sechsten Aspekt betrifft die Erfindung eine Vorrichtung zum Erzeugen von digitalen Dokumentendaten, welche ein Identifikationsdokument einer Person repräsentieren, mit: einer Bildkamera zur Aufnahme eines Bildes des Identifikationsdokumentes; einem Prozessor zum Erzeugen von digitalen Dokumentendaten, welche das Identifikationsdokument repräsentieren, auf der Basis des aufgenommenen Bildes; einer Kommunikationsschnittstelle zum Übermitteln der digitalen Dokumentendaten zu einer Speicherentität, insbesondere zu einem Identifikationsserver, über ein Kommunikationsnetzwerk, wobei die Kommunikationsschnittstelle ferner ausgebildet ist, eine Kennung zum Abrufen der gespeicherten Dokumentendaten von der Speicherentität über das Kommunikationsnetzwerk zu empfangen; und einem Speicher zum Speichern der empfangenen Kennung. Dadurch wird der Vorteil erreicht, dass mit dieser Vorrichtung eine effiziente Erzeugung der digitalen Dokumentendaten auf Basis einer Bildaufnahme erfolgen kann.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: ein Diagramm eines Verfahrens zur Bereitstellung digitaler Dokumentendaten;
- Fig. 2: ein Diagramm eines Verfahrens zum Erstellen eines Identifikationsdokumentes unter Verwendung von digitalen Dokumentendaten;
- Fig. 3a: ein schematisches Diagramm eines Kommunikationsgerätes zur Bereitstellen eines Identifikationsdokumentes;
- Fig. 3b: ein schematisches Diagramm eines Kommunikationsgerätes zur Bereitstellen eines Identifikationsdokumentes;
- Fig. 3c: ein schematisches Diagramm eines Kommunikationsgerätes zur Bereitstellen eines Identifikationsdokumentes; und
- Fig. 4: ein schematisches Diagramm einer Vorrichtung zum Erzeugen digitaler Dokumentendaten.

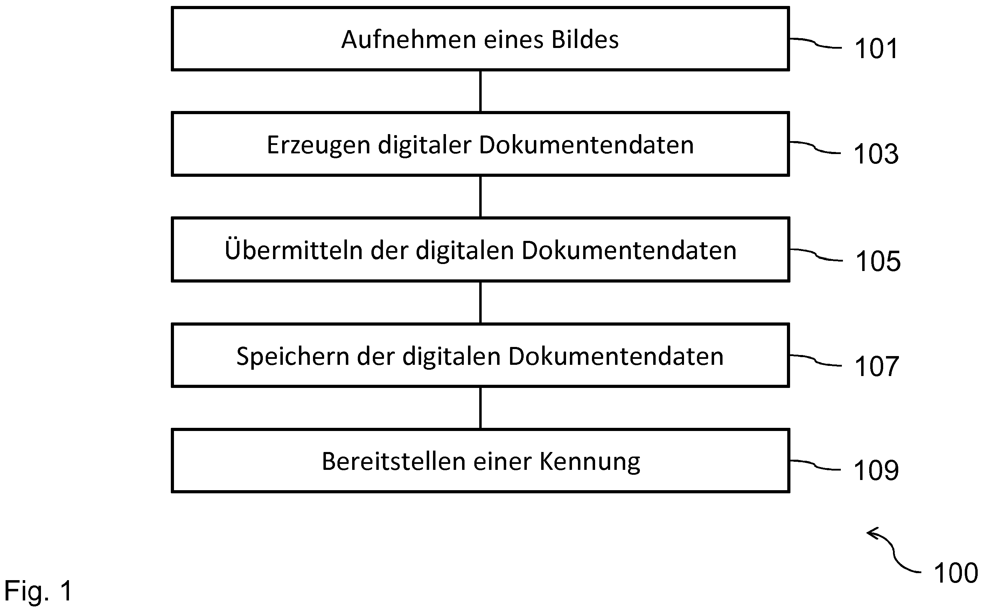

Fig. 1 zeigt ein Diagramm eines Verfahrens 100 zur Bereitstellung digitaler Dokumentendaten, welche ein Identifikationsdokument einer Person repräsentieren, gemäß einer Ausführungsform.

Das Verfahren 100 zur Bereitstellung digitaler Dokumentendaten umfasst das Aufnehmen 101 eines Bildes des Identifikationsdokumentes, das Erzeugen 103 der digitalen Dokumentendaten, das Übermitteln 105 der digitalen Dokumentendaten zu einer Speicherentität, das Speichern 107 der digitalen Dokumentendaten in der Speicherentität und das Bereitstellen 109 einer Kennung zum Abrufen der gespeicherten digitalen Dokumentendaten aus der Speicherentität.

Das Erzeugen 103 der digitalen Dokumentendaten kann nach dem Aufnehmen 101 des Bildes durch ein Bereitstellen von digitalen Bilddaten des aufgenommenen Bildes oder durch ein Digitalisieren des aufgenommenen Bildes erfolgen.

Gemäß einer Ausführungsform können die digitalen Dokumentendaten vor dem Übermitteln 105 an die Speicherentität oder in der Speicherentität kryptographisch verschlüsselt werden. Ferner kann das Übermitteln 105 der digitalen Dokumentendaten zu der Speicherentität über einen verschlüsselten Kommunikationskanal erfolgen und/oder können die digitalen Dokumentendaten in der Speicherentität kryptographisch verschlüsselt abgespeichert werden.

Die Verschlüsselung kann mittels eines kryptographischen Schlüssels, welcher der Person oder einem Dienstanbieter zugeordneten ist und/oder mittels einer digitalen Signatur der Person oder des Dienstanbieters erfolgen. Mit dem kryptographischen Schlüssel und/oder der digitalen Signatur kann eine Verifizierung der Echtheit der Dokumentendaten von Seiten der Person oder des Dienstanbieters erfolgen.

Das Bereitstellen 109 der Kennung zum Abrufen der gespeicherten digitalen Dokumentendaten kann nach dem Speichern 107 der digitalen Dokumentendaten erfolgen. Die Kennung kann einen Code, insbesondere einen optisch auslesbaren Code, und/oder ein Passwort und/oder ein biometrisches Merkmal der Person umfassen.

Ferner kann das Speichern 107 der digitalen Dokumentendaten in einem durch eine Kommunikationsadresse adressierbaren Speicherbereich des Speichergerätes erfolgen. Die Kennung kann diese Kommunikationsadresse umfassen.

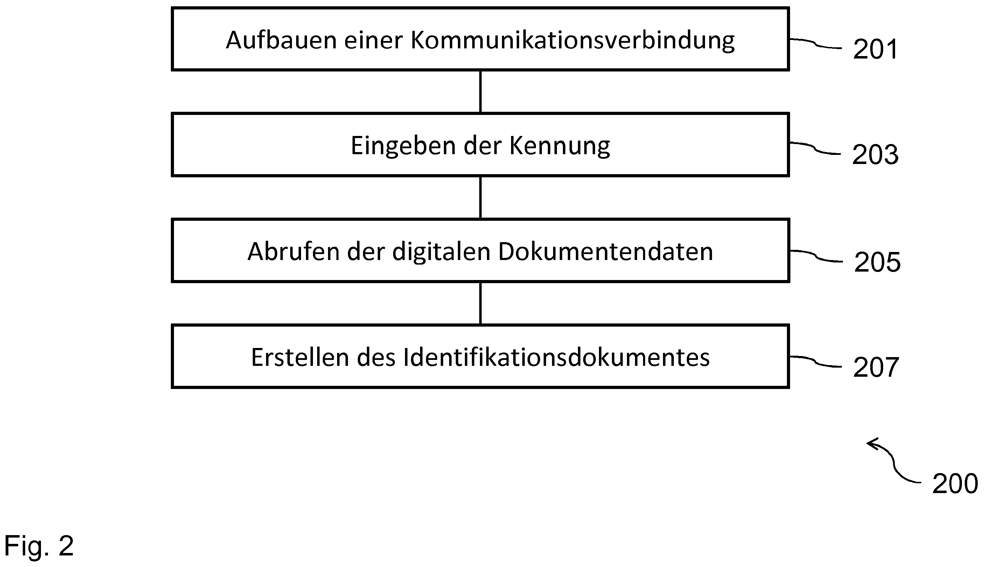

Fig. 2 zeigt ein Diagramm eines Verfahrens 200 zum Erstellen eines Identifikationsdokumentes unter Verwendung von digitalen Dokumentendaten gemäß einer Ausführungsform.

Das Verfahren 200 zum Erstellen eines Identifikationsdokumentes umfasst das Aufbauen 201 einer Kommunikationsverbindung zu der Speicherentität, das Eingeben 203 der Kennung oder eines durch die Kennung gespeicherten Passwortes, das Abrufen 205 von digitalen Dokumentendaten und das Erstellen 207 des Identifikationsdokumentes unter Verwendung der abgerufenen digitalen Dokumentendaten.

Das Eingeben 203 der Kennung oder eines durch die Kennung gespeicherten Passwortes kann in einer Eingabemaske erfolgen, welche von der Speicherentität bereitgestellt werden kann.

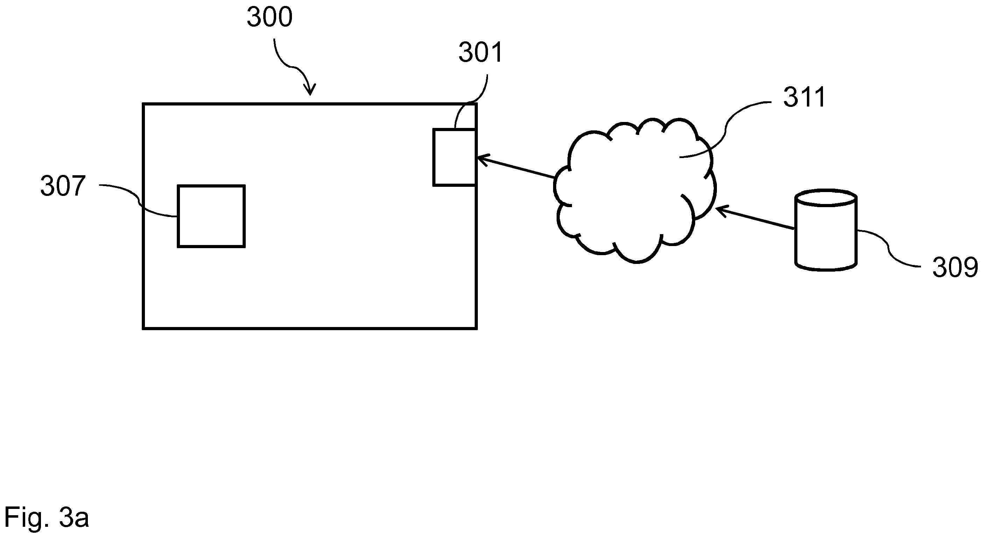

Fig. 3a zeigt ein schematisches Diagramm eines Kommunikationsgerätes 300 zum Bereitstellen eines Identifikationsdokumentes gemäß einer Ausführungsform. Das Kommunikationsgerät 300 umfasst eine Kommunikationsschnittstelle 301 zum Abrufen digitaler Dokumentendaten von einer Speicherentität 309 über ein Kommunikationsnetzwerk 311, und einen Speicher 307.

Gemäß einer Ausführungsform kann das Kommunikationsgerät 300 programmtechnisch eingerichtet sein, das Verfahren 200 zum Erstellen eines Identifikationsdokumentes auszuführen

Hierzu kann die Kommunikationsschnittstelle 301 zum Abrufen von digitalen Dokumentendaten eine Verbindung mit der Speicherentität 309 herstellen und die digitalen Dokumentendaten abrufen. In dem Speicher 307 des Kommunikationsgerätes 300 kann die Kennung gespeichert sein, welche zum Abrufen 205 der digitalen Dokumentendaten benötigt wird.

Die Speicherentität 309 kann ein Identifikationsserver sein, wobei das Übermitteln 105 der digitalen Dokumentendaten zu dem Identifikationsserver über ein Kommunikationsnetzwerk 311 erfolgen kann.

Das Kommunikationsnetzwerk 311 kann ein drahtloses Kommunikationsnetzwerk und/oder ein drahtgebundenes Kommunikationsnetzwerk sein. Der Identifikationsserver kann Teil eines Cloud-Netzwerkes in dem Kommunikationsnetzwerk 311 sein. Ferner kann es sich bei dem Kommunikationsnetzwerk 311 um ein lokales Netzwerk oder um das Internet handeln.

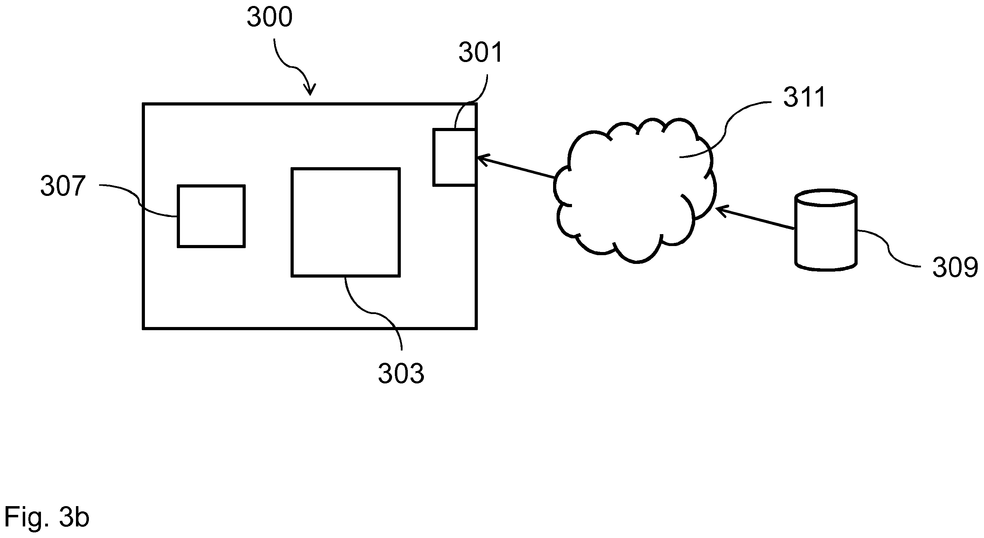

Fig. 3b zeigt ein schematisches Diagramm eines Kommunikationsgerätes 300 zum Bereitstellen eines Identifikationsdokumentes gemäß einer Ausführungsform. Das Kommunikationsgerät 300 umfasst eine Kommunikationsschnittstelle 301, einen Speicher 307 und eine Visualisierungseinrichtung 303.

Das Erstellen 207 des Identifikationsdokumentes kann mit Hilfe der Visualisierungseinrichtung 303 erfolgen. Die Visualisierungseinrichtung 303 kann eine Anzeigen, beispielsweise ein LCD-Display, ein Touch-Display oder ein OLED-Display, sein. Auf der Anzeige kann das Identifikationsdokument visualisiert werden. Ferner kann die Visualisierungseinrichtung 303 ein Drucker zum Ausdrucken des Identifikationsdokumentes auf einem Träger sein oder einen Drucker umfassen. Das Kommunikationsgerät 300 kann diesen Drucker umfassen.

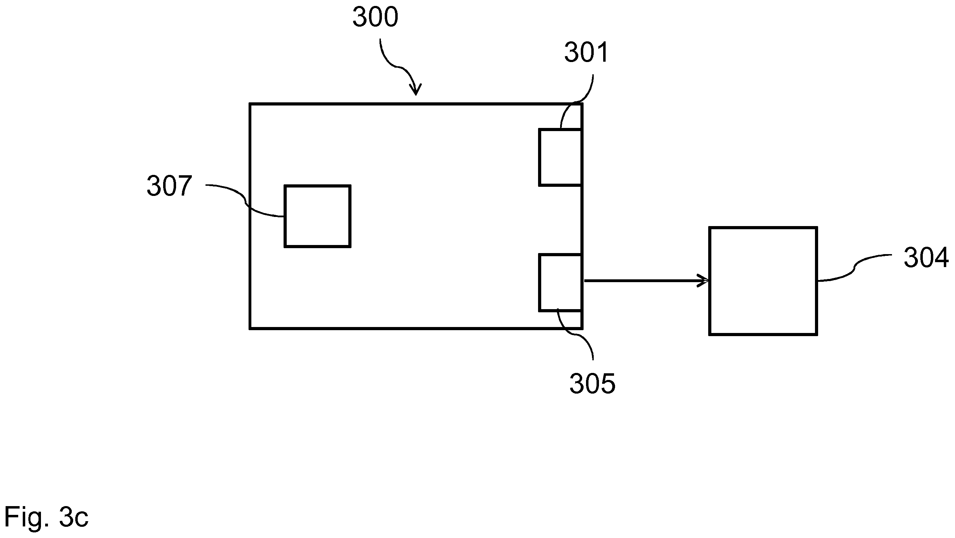

Fig. 3c zeigt ein schematisches Diagramm eines Kommunikationsgerätes 300 zum Bereitstellen eines Identifikationsdokumentes gemäß einer Ausführungsform. Das Kommunikationsgerät 300 umfasst eine Kommunikationsschnittstelle 301, einen Speicher 307 und eine Kommunikationsschnittstelle 305 zum Aussenden der abgerufenen digitalen Dokumentendaten an eine Visualisierungseinrichtung 304.

Die Visualisierungseinrichtung 304 kann eine externe Visualisierungseinrichtung sein. Die Visualisierungseinrichtung 304 kann Teil eines Datenverarbeitungsgerätes, beispielsweise eines weiteren Kommunikationsgerätes oder eines Computers sein.

Die Kommunikationsschnittstelle 305 zum Aussenden der abgerufenen digitalen Dokumentendaten kann die digitalen Dokumentendaten an die Visualisierungseinrichtung 304 über eine drahtlose und/oder drahtgebundene Kommunikationsverbindung übertragen.

Die Visualisierungseinrichtung 304 kann eine Anzeige, beispielsweise ein LCD-Display, ein Touch-Display oder ein OLED-Display, sein. Ferner kann die Visualisierungseinrichtung 304 ein Drucker, beispielsweise ein Laserdrucker, ein Tintenstrahldrucker, oder ein Kartendrucker, zum Ausrucken des Identifikationsdokumentes auf einem Träger sein.

Gemäß einer Ausführungsform kann der Träger aus dem gleichen Material wie das Identifikationsdokument sein, welches verwendet wurde, um die digitalen Dokumentendaten zu erzeugen. Insbesondere kann der Träger papier- und/oder kunststoffbasiert sein. Ferner kann der Träger die gleichen Maße wie das Identifikationsdokument aufweisen, welches verwendet wurde, um die digitalen Dokumentendaten zu erzeugen.

Gemäß einer Ausführungsform ist das Kommunikationsgerät 300 ein Smartphone. In diesem Fall kann die Visualisierungseinrichtung 303 eine Displayanzeige des Smartphones, beispielsweise ein LCD- oder OLED-Display, einen Drucker oder einen 3D-Drucker umfassen.

Gemäß einer Ausführungsform ist der Speicher 307 ein interner Speicher des Smartphones, beispielsweise ein Flash-Speicher.

Die Kommunikationsschnittstelle 301 zum Abrufen und/oder die Kommunikationsschnittstelle 305 zum Aussenden von digitalen Dokumentendaten können Kommunikationsschnittstellen des Smartphones, beispielsweise eine LTE-Kommunikationsschnittstelle, eine UMTS-Kommunikationsschnittstell, eine NFC-Kommunikationsschnittstelle oder eine Bluetooth-Kommunikationsschnittstelle, sein.

Gemäß einer weiteren Ausführungsform kann das Verfahren 200 zum Erstellen eines Identifikationsdokumentes zumindest teilweise von einem Computerprogramm ausgeführt werden. Bei dem Computerprogramm kann es sich um eine Applikationssoftware (App) handeln, welche auf dem Kommunikationsgerät 300 installiert sein kann. Bei dem Computerprogramm kann es sich ferner um einen Webserver handeln, welcher auf dem Kommunikationsgerät 300 installiert sein kann.

Gemäß einer weiteren Ausführungsform können die Erfassung und/oder die Anzeige von Daten ohne die Applikationssoftware oder ohne den Webserver durchgeführt werden.

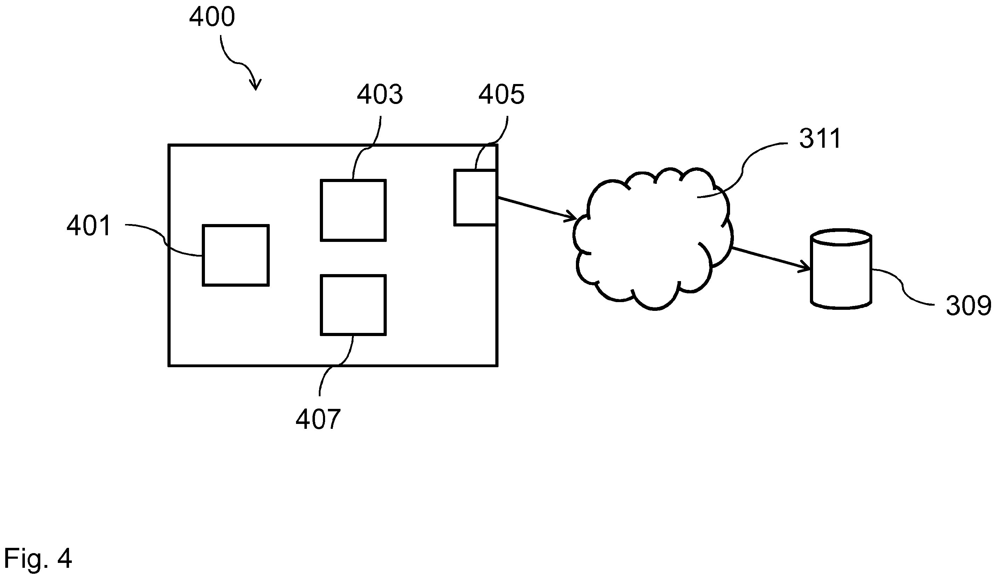

Fig. 4 zeigt ein schematisches Diagramm einer Vorrichtung 400 zum Erzeugen digitaler Dokumentendaten. Die Vorrichtung 400 umfasst eine Bildkamera 401, einen Prozessor 403, eine Kommunikationsschnittstelle 405 und einen Speicher 407.

Die Vorrichtung 400 kann programmtechnisch eingerichtet sein das Verfahren 100 zur Bereitstellung digitaler Dokumentendaten auszuführen.

Die Bildkamera 401 kann zum Aufnehmen 101 eines Bildes eines Identifikationsdokuments ausgebildet sein. Der Prozessor 403 kann zum Erzeugen 103 digitaler Dokumentendaten aus dem aufgenommen Bild ausgebildet sein. Die Kommunikationsschnittstelle 405 kann die digitalen Dokumentendaten an eine Speicherentität 309 über ein Kommunikationsnetzwerk 311 übermitteln und die Kennung zum Abrufen der gespeicherten Dokumentendaten von der Speicherentität 309 über das Kommunikationsnetzwerk 311 empfangen. Diese Kennung kann in dem Speicher 407 der Vorrichtung 400 gespeichert werden.

Die Dokumentendaten bzw. die gespeicherten Dokumentendaten können ferner Biometriedaten der Person umfassen. Die Biometriedaten können biometrische Merkmale der Person repräsentieren.

Gemäß einer Ausführungsform ist die Vorrichtung 400 zum Erzeugen digitaler Dokumentendaten ein Smartphone. In diesem Fall kann die Bildkamera 401 eine Smartphone-Kamera, beispielsweise mit einem CCD-Sensor zur Bildaufnahme, der Prozessor 403 ein Mikroprozessor des Smartphones und der Speicher 407 ein Flash-Speicher des Smartphones sein. Bei der Kommunikationsschnittstelle 405 kann es sich beispielsweise um eine LTE-Kommunikationsschnittstelle, eine UMTS-Kommunikationsschnittstelle, eine NFC-Kommunikationsschnittstelle oder eine Bluetooth-Kommunikationsschnittstelle des Smartphones handeln.

Gemäß einer weiteren Ausführungsform können die digitalen Dokumentendaten Identifikationsdaten der Person, beispielsweise Name, Alter oder Adresse der Person, digitale Bilddaten eines Bildes der Person, beispielsweise ein Passbild, Formatdaten, welche ein Format des Identifikationsdokumentes bestimmen, oder digitale Bilddaten eines Bildes des Identifikationsdokumentes sein.

Gemäß einer weiteren Ausführungsform können neben digitalen Dokumentendaten von Identifikationsdokumenten auch digitale Dokumentendaten von privaten Fotos und Dokumenten mit dem Verfahren 200 zum Erstellen eines Identifikationsdokumentes erzeugt und mit dem Verfahren 100 zum Bereitstellen digitaler Dokumentendaten bereitgestellt werden. Bei diesen privaten Dokumenten kann es sich beispielsweise um nicht offizielle Dokumente, wie Reservierungen, Flugtickets oder Tauchscheine, handeln.

Gemäß einer weiteren Ausführungsform kann das Verfahren 100 die Speicherung von Einreiseberechtigungen wie Visa und/oder Einreiseinformationen in dem Identifikationsdokument, beispielsweise Reisepass, umfassen.

Gemäß einer Ausführungsform kann das Verfahren 100 die Speicherung von behördlichen Dokumenten, wie beispielsweise Jagdscheinen umfassen, insbesondere wenn hierfür die Dokumenten- oder -formatvorlagen vorliegen oder erstellt sind.

Gemäß einer weiteren Ausführungsform kann das Verfahren 100 zum Bereitstellen von digitalen Dokumentendaten, welche ein Identifikationsdokument einer Person repräsentieren, zumindest teilweise von einem Computerprogramm ausgeführt werden. Bei dem Computerprogramm kann es sich um eine Applikationssoftware handeln, welche auf der Vorrichtung 400 installiert ist.

Gemäß einer weiteren Ausführungsform handelt es sich bei dem Kommunikationsgerät 300 und der Vorrichtung 400 zum Erzeugen digitaler Dokumentendaten um das gleiche Gerät, beispielsweise um einen Computer oder ein Smartphone.

Gemäß einer Ausführungsform können das Verfahren 100 zum Bereitstellen von digitalen Dokumentendaten und das Verfahren 200 zum Erstellen eines Identifikationsdokumentes zumindest teilweise von einem Computerprogramm ausgeführt werden, beispielsweise einer Applikationssoftware, welche auf einem Computer oder einem Smartphone installiert werden kann.

### Bezugszeichenliste

- 100: Verfahren zur Bereitstellung digitaler Dokumentendaten
- 101: Aufnehmen eines Bildes
- 103: Erzeugen digitaler Dokumentendaten
- 105: Übermitteln der digitalen Dokumentendaten
- 107: Speichern der digitalen Dokumentendaten
- 109: Bereitstellen einer Kennung

- 200: Verfahren zum Erstellen eines Identifikationsdokumentes
- 201: Aufbauen einer Kommunikationsverbindung
- 203: Eingeben der Kennung
- 205: Abrufen der digitalen Dokumentendaten
- 207: Erstellen des Identifikationsdokumentes

- 300: Kommunikationsgerät
- 301: Kommunikationsschnittstelle
- 303: Visulisierungseinrichtung
- 304: Visulisierungseinrichtung
- 305: Kommunikationsschnittstelle
- 307: Speicher
- 309: Speicherentität
- 311: Kommunikationsnetzwerk

- 400: Vorrichtung zum Erzeugen digitaler Dokumentendaten
- 401: Bildkamera
- 403: Prozessor
- 405: Kommunikationsschnittstelle
- 407: Speicher

## Patentansprüche

1. Verfahren (100) zum Bereitstellen von digitalen Dokumentendaten, welche ein Identifikationsdokument einer Person repräsentieren, mit:
Erzeugen (103) der digitalen Dokumentendaten auf der Basis des Identifikationsdokumentes in einem Kommunikationsgerät (300);
Übermitteln (105) der digitalen Dokumentendaten zu einer Speicherentität (309) über ein Kommunikationsnetzwerk;
Speichern (107) der digitalen Dokumentendaten in der Speicherentität (309);
Bereitstellen (109) einer Kennung zum Abrufen der gespeicherten digitalen Dokumentendaten aus der Speicherentität (309); und
Speichern der Kennung in einem Speicher (307, 407) des Kommunikationsgeräts (300),
wobei die Kennung ein Passwort der Person umfasst,
wobei die digitalen Dokumentendaten vor der Übermittlung an die Speicherentität (309) oder in der Speicherentität (309) kryptographisch verschlüsselt werden.

2. Verfahren (100) nach Anspruch 1, wobei die digitalen Dokumentendaten vor der Übermittlung an die Speicherentität (309) oder in der Speicherentität (309) unter Verwendung eines der Person oder einem Dienstanbieter zugeordneten kryptographischen Schlüssels oder einer digitalen Signatur der Person oder des Dienstanbieters verschlüsselt werden.

3. Verfahren (100) nach Anspruch 1 oder 2, wobei die digitalen Dokumentendaten digitale Druckdaten des Identifikationsdokumentes sind oder umfassen, mit welchen das Identifikationsdokument herstellbar ist.

4. Verfahren (100) nach Anspruch 3, wobei die digitalen Druckdaten während der Herstellung des Identifikationsdokumentes erzeugt und als digitale Dokumentendaten an die Speicherentität (309) übermittelt werden.

5. Verfahren (100) nach einem der vorstehenden Ansprüche, wobei die digitalen Dokumentendaten eine oder mehrere der nachfolgenden Daten umfassen: Identifikationsdaten der Person, digitale Bilddaten eines Bildes der Person, Formatdaten, welche ein Format des Identifikationsdokumentes bestimmen, digitale Bilddaten eines Bildes des Identifikationsdokumentes.

6. Verfahren (100) nach einem der vorstehenden Ansprüche, wobei das Erzeugen (103) der digitalen Dokumentendaten die folgenden Schritte umfasst:
Aufnehmen (101) eines Bildes des Identifikationsdokumentes; und
Bereitstellen von digitalen Bilddaten des aufgenommenen Bildes oder Digitalisieren des aufgenommenen Bildes, um die digitalen Dokumentendaten zu erzeugen.

7. Verfahren (100) nach einem der vorstehenden Ansprüche, wobei die Speicherentität (309) ein Identifikationsserver ist, der über ein Kommunikationsnetzwerk (311) erreichbar ist, wobei die digitalen Dokumentendaten zu dem Identifikationsserver über das Kommunikationsnetzwerk (311) übermittelt werden, und wobei die Kennung zum Abrufen der gespeicherten digitalen Dokumentendaten bereitgestellt wird.

8. Verfahren (100) nach einem der vorstehenden Ansprüche, wobei die Kennung einen Code, insbesondere einen optisch auslesbaren Code umfasst.

9. Verfahren (200) zum Erstellen eines Identifikationsdokumentes einer Person unter Verwendung einer der Person zugeordneten Kennung, wobei die Kennung in einem Speicher gespeichert ist, mit:
Abrufen (205) von digitalen Dokumentendaten, welche das Identifikationsdokument repräsentieren, unter Verwendung der Kennung von einer Speicherentität (309); und
Erstellen (207) des Identifikationsdokumentes unter Verwendung der abgerufenen digitalen Dokumentendaten,
wobei die Kennung ein Passwort der Person umfasst,
wobei die digitalen Dokumentendaten in der Speicherentität (309) kryptographisch verschlüsselt werden, insbesondere unter Verwendung eines der Person oder einem Dienstanbieter zugeordneten kryptographischen Schlüssels oder einer digitalen Signatur der Person oder des Dienstanbieters verschlüsselt werden.

10. Verfahren (200) nach Anspruch 9, wobei die digitalen Dokumentendaten von der Speicherentität (309) über ein Kommunikationsnetzwerk (311) abgerufen werden, und wobei das Abrufen der digitalen Dokumentendaten die folgenden Schritte umfasst:
Aufbauen (201) einer Kommunikationsverbindung zu der Speicherentität (309);
Eingeben (203) der Kennung oder eines durch die Kennung gespeicherten Passwortes in eine Eingabemaske, insbesondere in einer durch die Speicherentität (309) bereitgestellten Eingabemaske; und
Abrufen (205), insbesondere Herunterladen, der digitalen Dokumentendaten ansprechend auf die Eingabe der Kennung oder des Passwortes.

11. Verfahren (200) nach Anspruch 9 oder 10, wobei das Erstellen (207) des Identifikationsdokumentes das Ausdrucken des Identifikationsdokumentes unter Verwendung der abgerufenen digitalen Dokumentendaten oder das Anzeigen des Identifikationsdokumentes unter Verwendung der abgerufenen digitalen Dokumentendaten auf einer elektronischen Anzeige umfasst.

12. Kommunikationsgerät (300) zum Bereitstellen eines Identifikationsdokumentes einer Person, mit:
einer Kommunikationsschnittstelle (301), welche ausgebildet ist, unter Verwendung einer der Person zugeordneten Kennung digitale Dokumentendaten von einer Speicherentität (309) abzurufen,
wobei die Kennung ein Passwort der Person umfasst;
einem Speicher, in welchem die Kennung gespeichert ist; und
einer Visualisierungseinrichtung (303) zur Visualisierung des Identifikationsdokumentes auf der Basis der abgerufenen digitalen Dokumentendaten; oder
einer Kommunikationsschnittstelle (305) zum Aussenden der abgerufenen digitalen Dokumentendaten an eine Visualisierungseinrichtung (304),
wobei die digitalen Dokumentendaten in der Speicherentität (309) kryptographisch verschlüsselt werden.

13. Kommunikationsgerät (300) nach Anspruch 12, welches programmtechnisch eingerichtet ist, um das Verfahren (200) gemäß einem der Ansprüche 10 bis 11 auszuführen,
wobei das Abrufen (205) der digitalen Dokumentendaten über eine Kommunikationsschnittstelle (301) des Kommunikationsgeräts (300) erfolgt,
wobei die Kennung in einem Speicher (307, 407) des Kommunikationsgeräts (300, 400) gespeichert ist.

14. Computerprogramm mit einem Programmcode zum Ausführen der Verfahren (100, 200) nach einem der Ansprüche 1 bis 11, wenn es auf einem Computer ausgeführt wird.

15. Vorrichtung (400) zum Erzeugen von digitalen Dokumentendaten, welche ein Identifikationsdokument einer Person repräsentieren, mit:
einer Bildkamera (401) zur Aufnahme eines Bildes des Identifikationsdokumentes;
einem Prozessor (403) zum Erzeugen von digitalen Dokumentendaten, welche das Identifikationsdokument repräsentieren, auf der Basis des aufgenommenen Bildes;
einer Kommunikationsschnittstelle (405) zum Übermitteln der digitalen Dokumentendaten zu einer Speicherentität über ein Kommunikationsnetzwerk, wobei die Kommunikationsschnittstelle (405) ferner ausgebildet ist, eine Kennung zum Abrufen der gespeicherten Dokumentendaten von der Speicherentität über das Kommunikationsnetzwerk zu empfangen; und
einem Speicher (407) zum Speichern der empfangenen Kennung,
wobei die Kennung ein Passwort der Person umfasst,
wobei die digitalen Dokumentendaten vor der Übermittlung an die Speicherentität (309) oder in der Speicherentität (309) kryptographisch verschlüsselt werden.

## Claims

1. Method (100) for providing digital document data, which represent an identification document of a person, the method (100) comprising:
generating (103) the digital document data based on the identification document in a communication device (300);
transmitting (105) the digital document data to a storage entity (309) via a communication network;
storing (107) the digital document data in the storage entity (309);
providing (109) an identifier for retrieving the stored digital document data from the storage entity (309); and
storing the identifier in a memory (307, 407) of the communication device (300),
wherein the identifier comprises a password of the person,
wherein the digital document data are cryptographically encrypted before the transmitting to the storage entity (309) or are cryptographically encrypted in the storage entity (309).

2. Method (100) according to claim 1, wherein the digital document data are cryptographically encrypted before the transmitting to the storage entity (309) or are cryptographically encrypted in the storage entity (309) using a cryptographic key associated with the person or a service provider or using a digital signature of the person or the service provider.

3. Method (100) according to claim 1 or 2, wherein the digital document data are or comprise digital print data of the identification document with which the identification document is producible.

4. Method (100) according to claim 3, wherein the digital print data are generated during the production of the identification document and are transmitted as digital document data to the storage entity (309).

5. Method (100) according to any of the preceding claims, wherein the digital document data comprise one or more of the following data: identification data of the person, digital image data of an image of the person, format data which determine a format of the identification document, digital image data of an image of the identification document.

6. Method (100) according to one of the preceding claims, wherein the generating (103) of the digital document data comprises the following steps:
capturing (101) a picture of the identification document; and
providing digital image data of the captured image or digitizing the captured image in order to generate the digital document data.

7. Method (100) according to one of the preceding claims, wherein the storage entity (309) is an identification server which is reachable via a communication network (311), wherein the digital document data are transmitted to the identification server via the communication network (311), and wherein the identifier is provided for retrieving the stored digital document data.

8. Method (100) according to one of the preceding claims, wherein the identifier comprises a code, in particular an optically readable code.

9. Method (200) for creating an identification document of a person using an identifier associated with the person, wherein the identifier is stored in a memory, the method (200) comprising:
retrieving (205) digital document data representing the identification document using the identifier from a storage entity (309); and
creating (207) the identification document using the retrieved digital document data,
wherein the identifier comprises a password of the person,
wherein the digital document data in the storage entity (309) are cryptographically encrypted, in particular using a cryptographic key associated with the person or a service provider or using a digital signature of the person or the service provider.

10. Method (200) according to claim 9, wherein the digital document data are retrieved from the storage entity (309) via a communication network (311), and wherein the retrieving of the digital document data comprises the following steps:
establishing (201) a communication link to the storage entity (309);
entering (203) the identifier or a password stored by the identifier into an input mask, in particular in an input mask provided by the storage entity (309); and
retrieving (205), in particular downloading, the digital document data in response to the entering of the identifier or password.

11. Method (200) according to claim 9 or 10, wherein the creating (207) of the identification document comprises the printing of the identification document using the retrieved digital document data or the displaying of the identification document using the retrieved digital document data on an electronic display.

12. Communication device (300) for providing an identification document of the person, the communication device (300) comprising:
a communication interface (301), which is configured to retrieve digital document data from a storage entity (309) using an identifier associated with the person,
wherein the identifier comprises a password of the person;
a memory, in which the identifier is stored; and
a visualization device (303) for visualizing the identification document based on the retrieved digital document data; or
a communication interface (305) for sending the retrieved digital document data to a visualization device (304),
wherein the digital document data are cryptographically encrypted in the storage entity (309).

13. Communication device (300) according to claim 12, which is adapted to execute the method (200) according to one of claims 10 to 11 in a program technical manner,
wherein the retrieving (205) of the digital document data is performed via a communication interface (301) of the communication device (300),
wherein the identifier is stored in a memory (307, 407) of the communication device (300, 400).

14. Computer program comprising program code for executing the methods (100, 200) according to one of claims 1 to 11 when executed on a computer.

15. Device (400) for generating digital document data representing an identification document of a person, the device (400) comprising:
a camera (401) for capturing a picture of the identification document;
a processor (403) for generating digital document data representing the identification document, based on the captured image;
a communication interface (405) for transmitting the digital document data to a storage entity via a communication network, wherein the communication interface (405) is further configured to receive an identifier for retrieving the stored document data from the storage entity via the communication network; and
a memory (407) for storing the received identifier,
wherein the identifier comprises a password of the person,
wherein the digital document data are cryptographically encrypted before the transmitting to the storage entity (309) or are cryptographically encrypted in the storage entity (309).

## Revendications

1. Procédé (100) de fourniture de données de documents numériques représentant un document d'identité d'une personne, le procédé (100) comprenant :
génération (103) des données du document numérique à partir du document d'identification dans un dispositif de communication (300) ;
transmission (105) des données du document numérique à une entité de stockage (309) via un réseau de communication ;
stockage (107) des données du document numérique dans l'entité de stockage (309) ;
fournir (109) un identifiant permettant de récupérer les données du document numérique stockées auprès de l'entité de stockage (309) ; et
stocker l'identifiant dans une mémoire (307, 407) du dispositif de communication (300),
dans lequel l'identifiant comprend un mot de passe de la personne,
dans lequel les données du document numérique sont cryptées cryptographiquement avant la transmission à l'entité de stockage (309) ou sont cryptées cryptographiquement dans l'entité de stockage (309).

2. Procédé (100) selon la revendication 1, dans lequel les données du document numérique sont chiffrées cryptographiquement avant leur transmission à l'entité de stockage (309) ou sont chiffrées cryptographiquement dans l'entité de stockage (309) à l'aide d'une clé cryptographique associée à la personne ou à un fournisseur de services ou à l'aide d'une signature numérique de la personne ou du fournisseur de services.

3. Procédé (100) selon la revendication 1 ou 2, dans lequel les données du document numérique sont ou comprennent des données d'impression numérique du document d'identification avec lequel le document d'identification est produit.

4. Procédé (100) selon la revendication 3, dans lequel les données d'impression numérique sont générées lors de la production du document d'identification et sont transmises sous forme de données de document numérique à l'entité de stockage (309).

5. Procédé (100) selon l'une quelconque des revendications précédentes, dans lequel les données du document numérique comprennent une ou plusieurs des données suivantes : données d'identification de la personne, données d'image numérique d'une image de la personne, données de format qui déterminent un format du document d'identification, données d'image numérique d'une image du document d'identification.

6. Procédé (100) selon l'une des revendications précédentes, dans lequel la génération (103) des données du document numérique comprend les étapes suivantes :
capture (101) d'une image du document d'identité ; et
fournir des données d'image numérique de l'image capturée ou numériser l'image capturée afin de générer les données du document numérique.

7. Procédé (100) selon l'une des revendications précédentes, dans lequel l'entité de stockage (309) est un serveur d'identification accessible via un réseau de communication (311), dans lequel les données du document numérique sont transmises au serveur d'identification via le réseau de communication (311), et dans lequel l'identifiant est fourni pour récupérer les données du document numérique stockées.

8. Procédé (100) selon l'une des revendications précédentes, dans lequel l'identificateur comprend un code, en particulier un code optiquement lisible.

9. Procédé (200) de création d'un document d'identification d'une personne utilisant un identifiant associé à cette personne, dans lequel l'identifiant est stocké en mémoire, le procédé (200) comprenant :
récupération (205) des données de document numérique représentant le document d'identification à l'aide de l'identifiant à partir d'une entité de stockage (309) ; et
création (207) du document d'identification à partir des données numériques récupérées,
dans lequel l'identifiant comprend un mot de passe de la personne,
dans lequel les données du document numérique dans l'entité de stockage (309) sont chiffrées cryptographiquement, notamment à l'aide d'une clé cryptographique associée à la personne ou au fournisseur de services ou à l'aide d'une signature numérique de la personne ou du fournisseur de services.

10. Procédé (200) selon la revendication 9, dans lequel les données du document numérique sont récupérées à partir de l'entité de stockage (309) via un réseau de communication (311), et dans lequel la récupération des données du document numérique comprend les étapes suivantes :
établir (201) une liaison de communication avec l'entité de stockage (309) ;
saisir (203) l'identifiant ou un mot de passe stocké par l'identifiant dans un masque de saisie, notamment dans un masque de saisie fourni par l'entité de stockage (309) ; et
récupération (205), en particulier téléchargement, des données du document numérique en réponse à la saisie de l'identifiant ou du mot de passe.

11. Procédé (200) selon la revendication 9 ou 10, dans lequel la création (207) du document d'identification comprend l'impression du document d'identification à l'aide des données de document numérique récupérées ou l'affichage du document d'identification à l'aide des données de document numérique récupérées sur un écran électronique.

12. Dispositif de communication (300) permettant de fournir un document d'identification de la personne, le dispositif de communication (300) comprenant :
une interface de communication (301), configurée pour récupérer des données de documents numériques à partir d'une entité de stockage (309) à l'aide d'un identifiant associé à la personne,
dans lequel l'identifiant comprend un mot de passe de la personne ;
une mémoire dans laquelle l'identifiant est stocké ; et
un dispositif de visualisation (303) permettant de visualiser le document d'identification à partir des données numériques extraites du document ; ou
une interface de communication (305) pour envoyer les données du document numérique récupéré à un dispositif de visualisation (304),
dans lequel les données du document numérique sont cryptées cryptographiquement dans l'entité de stockage (309).

13. Dispositif de communication (300) selon la revendication 12, adapté pour exécuter le procédé (200) selon l'une des revendications 10 à 11 de manière technique programmée,
dans lequel la récupération (205) des données du document numérique est effectuée via une interface de communication (301) du dispositif de communication (300),
dans lequel l'identifiant est stocké dans une mémoire (307, 407) du dispositif de communication (300, 400).

14. Programme informatique comprenant un code de programme pour exécuter les méthodes (100, 200) selon l'une des revendications 1 à 11 lorsqu'il est exécuté sur un ordinateur.

15. Dispositif (400) de génération de données de documents numériques représentant un document d'identification d'une personne, le dispositif (400) comprenant :
une caméra (401) pour capturer une image du document d'identification ;
un processeur (403) pour générer des données de document numérique représentant le document d'identification, sur la base de l'image capturée ;
une interface de communication (405) pour transmettre les données du document numérique à une entité de stockage via un réseau de communication, cette interface de communication (405) étant en outre configurée pour recevoir un identifiant permettant de récupérer les données du document stockées auprès de l'entité de stockage via le réseau de communication ; et
une mémoire (407) pour stocker l'identifiant reçu,
dans lequel l'identifiant comprend un mot de passe de la personne,
dans lequel les données du document numérique sont cryptées cryptographiquement avant la transmission à l'entité de stockage (309) ou sont cryptées cryptographiquement dans l'entité de stockage (309).
